# EUROPEAN PATENT SPECIFICATION

(11) **EP 0 220 867 B1**
(45) Date of publication and mention of the grant of the patent: **04.01.1995**
(21) Application number: 86307866.3
(22) Date of filing: 10.10.1986
(51) Int. Cl.: H04B 1/18

(54) **Apparatus for receiving satellite broadcast signals**
Apparat zum Empfang von Satellitrundfunksignalen
Appareil de réception de signaux radiodiffusés par satellite

(30) Priority: 21.10.1985 JP 234976/85
(43) Date of publication of application: 06.05.1987
(73) Proprietor: SONY CORPORATION, Tokyo 141 (JP)
(72) Inventor: Hayashi, Toshihide c/o Sony Corporation, Shinagawa-ku Tokyo 141 (JP); Yamakami, Osamu c/o Sony Corporation, Shinagawa-ku Tokyo 141 (JP); Kanayama, Ikuo c/o Sony Corporation, Shinagawa-ku Tokyo 141 (JP)
(74) Representative: Cotter, Ivan John

(56) References cited:
- EP-A- 0 196 607
- US-A- 4 538 175
- CONFERENCE PROCEEDINGS IEEE SOUTHEASTCON '85, Raleigh, North Carolina, 31st March - 3rd April 1985, pages 106-110, IEEE, New York, US; F. LUPINETTI et al.:"A C - band satellite receiver"
- IEEE TRANSACTIONS ON CONSUMER ELECTRONICS, vol. CE-29, no. 3, August 1983, pages 388-402, IEEE, New York, US; M. HAJJ et al.: "Indoor unit for direct broadcast satellite (DBS) (RF to demodulation part)"
- N.E.C. RESEARCH & DEVELOPMENT, no. 69, April 1983, pages 36-42, Tokyo, JP; H. YOSHIDA et al.: "12 GHz broadcasting satellite receiver"

## Description

This invention relates to apparatus for receiving satellite broadcast signals.

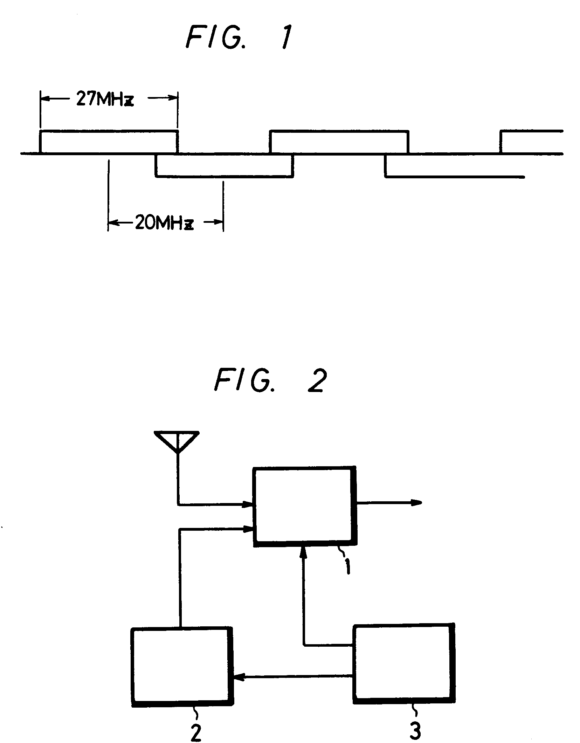

In the case of multichannel satellite broadcasting, while the necessary bandwidth of each channel is, for example, 27 MHz, the frequency spacing between adjacent channels is smaller than the bandwidth, being for example about 20 MHz, as shown in Figure 1 of the accompanying drawings. Accordingly, in order to avoid radio interference between adjacent channels, it has been proposed to make the planes of polarisation of the satellite broadcast signals different for adjacent channels. By way of example, it has been proposed to make use of a horizontally polarised wave and a vertically polarised wave, or a clockwise circularly polarised wave and an anticlockwise circularly polarised wave, and so on. Such a system is disclosed, for example, in Conference Proceedings IEEE SOUTHEASTCON ′85, Raleigh, North Carolina, USA, 31 March - 3 April 1985, pages 106 - 110, IEEE, New York, USA, F Lupinetti et al: "A C-Band Satellite Receiver".

In a previously proposed super-high frequency (SHF) receiver which receives satellite broadcast signals having different planes of polarisation for adjacent channels, when all the channels are sequentially selected, the channel selection is carried out in the sequential order of channel 1, channel 2, channel 3 .....etc. In this case, the receiving plane of polarisation of a polariser is automatically changed over for each channel change, so that the channel selection speed is necessarily slow. Alternatively, it has been proposed to provide an SHF receiver in which the receiving plane of polarisation of the polariser is fixed and alternate channels, for example odd-numbered channels, are selected sequentially. In this SHF receiver, when the other alternate channels, for example the even-numbered channels, are selected, the user has to manually change over the receiving plane of polarisation of the polariser, which is very bothersome for the user.

According to the invention there is provided apparatus for receiving satellite broadcast signals that are broadcast in a number of channels occupying successively overlapping frequency bands with first alternate channels having a first plane of polarisation and second channels arranged between the first channels and having a second plane of polarisation, the apparatus comprising:
antenna means for receiving the satellite broadcast signals;
polariser means for receiving a satellite broadcast signal derived from the antenna means and providing a plane of polarisation that can be switched for correspondence with the plane of polarisation of the received satellite broadcast signal;
channel selecting means for selecting the channels of the satellite broadcast signals;
means for tuning to each channel selected by the channel selecting means; and
control means for controlling the selecting of the channels, the tuning of the tuning means and the switching of the plane of polarisation of the polariser means in accordance with a channel selected by the channel selecting means;
characterised in that the channel selecting means is operative to select the channels sequentially, and in that the control means is operative to cause the channel selecting means to first select sequentially from among the first alternate channels having the first plane of polarisation, and thereafter to switch the plane of polarisation of the polariser means and then cause channel selecting in sequence from among the second channels having the second plane of polarisation.

A preferred form of receiving apparatus embodying this invention and described hereinbelow can free the user from the need to perform bothersome operations, such as switching the receiving plane of polarisation of a polariser and so on, and also can sequentially select the channels at a high channel selection speed.

The invention will now be further described, by way of illustrative and non-limiting example, with reference to the accompanying drawings, in which like references designate like elements and parts throughout, and in which:
Figure 1 is a schematic representation to which reference is made in explaining the necessity of switching the planes of polarisation of channels of satellite broadcast signals;
Figure 2 is a block diagram broadly showing a principle employed in satellite broadcast receivers embodying the present invention;
Figure 3 (formed of Figures 3-I and 3-II) is a block diagram showing in detail the construction of a satellite broadcast receiver embodying the present invention;
Figure 4 is a schematic representation showing a format of a satellite broadcast signal;
Figures 5A to 5D are diagrams showing positions of carrier waves of frequency modulated (FM) audio signals for respective modes; and
Figure 6 is a flow chart to which reference will be made in explaining the operation of the satellite broadcast receiver embodying the invention in selecting the channels in sequence.

Before describing a preferred embodiment of the present invention in detail, a fundamental principle employed in satellite broadcast receivers embodying the invention will first briefly be described with reference to Figure 2.

In Figure 2, a super-high frequency (SHF) satellite broadcast receiver embodying this invention is shown to comprise a receiving unit 1 for receiving satellite broadcast signals having different planes of polarisation (for example horizontal and vertical planes of polarisation) for adjacent channels, a switching unit 2 for changing over a receiving plane of polarisation of the receiving unit 1, and a controller 3, for example a microcomputer, for controlling operation of the receiving unit 1 and the switching unit 2. In response to the control by the controller 3, the receiving unit 1 sequentially selects every other channel, for example odd-numbered channels, whose satellite broadcast signals have a first polarisation plane. Then, the switching unit 2 changes over the receiving polarisation plane from the first polarisation plane to a second polarisation plane and, thereafter, the receiving unit 1 sequentially selects the remaining alternate channels, for example even-numbered channels, whose satellite broadcast signals have the second plane of polarisation.

As set forth above, after the alternate channels whose satellite broadcast signals having the first plane of polarisation have been sequentially selected, the receiving plane of polarisation is switched and then the other alternate channels whose satellite broadcast signals have the second plane of polarisation are sequentially selected. Thus, although all of the channels are eventually selected or scanned, the receiving plane of polarisation is switched only once. Further, such switching of the receiving plane of polarisation easily can be effected automatically.

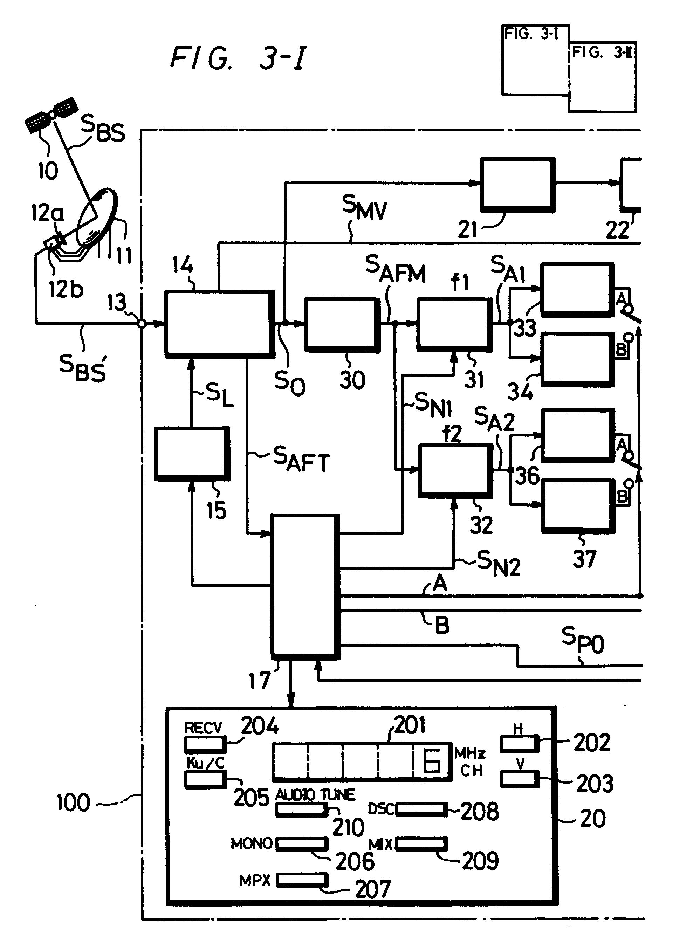

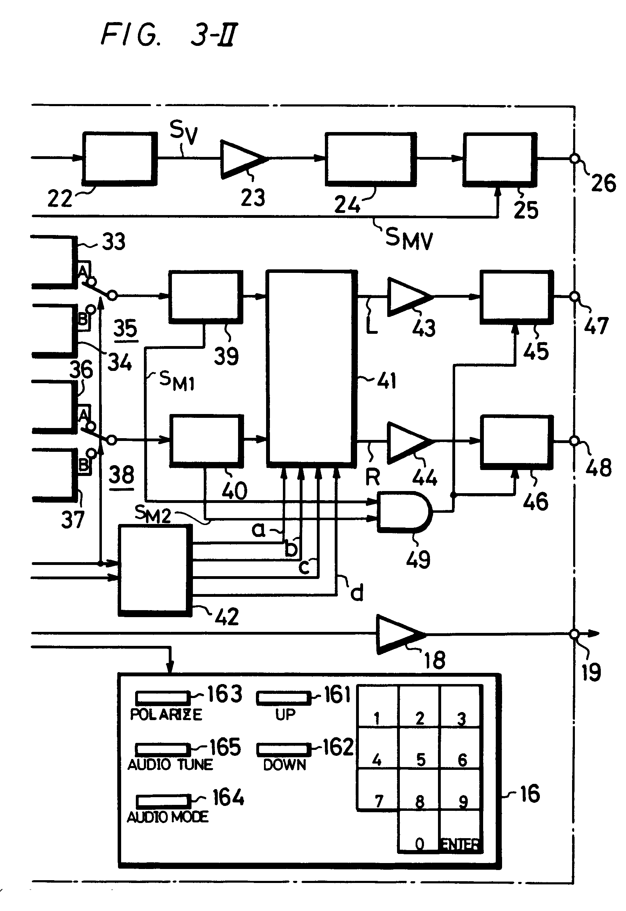

A preferred form of SHF satellite broadcast receiver embodying the present invention will now be described in detail with reference to Figure 3, which is formed of Figures 3-I and 3-II which are presented on two sheets of the drawings so as to be of a sufficiently large scale.

In Figure 3, a satellite broadcast signal S_{BS} of the ku band (12 GHz band ranging from 11.7 to 12.2 GHz) or the c band (4 GHz band ranging from 3.7 to 4.2 GHz) is transmitted from a broadcasting satellite 10 and supplied through a BS antenna (aerial) 11 to a polariser 12a. The polariser 12a may be of a well known type, for example as is disclosed in US Patent No. US-A-4 414 516. The satellite broadcast signal S_{BS} received by the polariser 12a is supplied to a super-high frequency/ultra-high frequency (S/U) converter 12b. In the S/U converter 12b, the satellite broadcast signal S_{BS} is frequency-converted to a signal S_{BS}′ having a frequency of 950 to 1450 MHz with respect to both the ku band and the c band.

In other words, a local frequency suitably provided in the S/U converter 12b for frequency conversion is selectively provided with a frequency of 10.75 GHz for the ku band or with a frequency of 2.75 GHz for the c band. Although Figure 3 shows a single system comprising the BS antenna 11 and the S/U converter 12b, in practice, for reception of the ku band and the c band, different respective systems, each formed of a BS antenna and an S/U converter, may be employed, with a suitable arrangement being provided for selecting one system or the other and providing the respective local frequency.

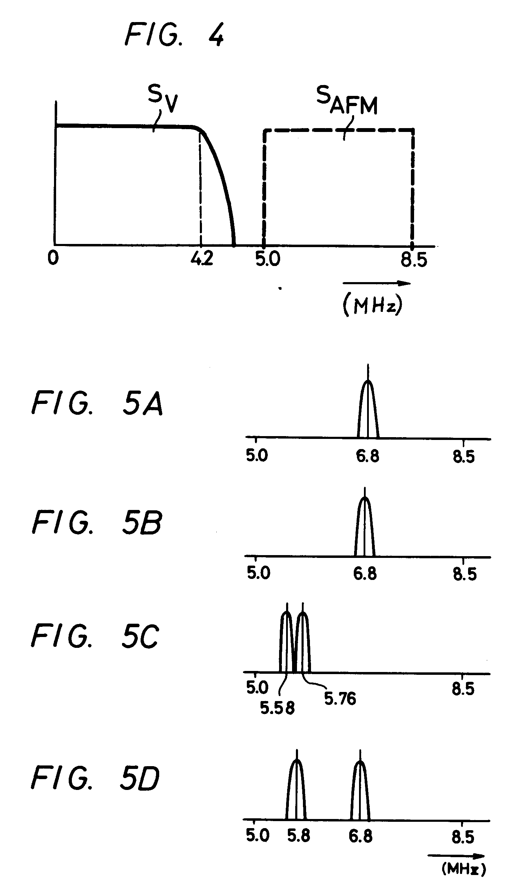

As shown in Figure 4, the satellite broadcast signal S_{BS} is a signal in which a video signal S_{V}, whose highest frequency is 4.2 MHz, is frequency-multiplexed with a frequency modulated (FM) audio signal S_{AFM} whose carrier wave is in a frequency band above the highest frequency of the video signal S_{V}, for example in a 5 to 8.5 MHz band, and the carrier wave of 12 GHz or 4 MHz for the ku band or the c band, respectively, is frequency-modulated by the signals Sv and S_{AFM}. Accordingly, the signal S_{BS}′ is also an FM signal.

The satellite broadcast signal S_{BS} can have any one of 4 audio modes, such as: (1) a monaural mode; (2) a multiplex mode; (3) a discrete mode; and (4) a matrix mode.

The FM audio signal S_{AFM} in the case of the monaural mode is a monaural audio signal S_{A} which results from frequency modulating a single carrier wave of 5 to 8.5 MHz. The frequency deviation thereof is suitably selected, for example, as 75 kHz. The FM audio signal S_{AFM} in the case of the multiplex mode is a composite signal which results from mixing a sum signal (L + R) of a left audio signal L and a right audio signal R and a signal which results from frequency modulating a single sub-carrier by a difference signal (L - R). In this case, the single carrier wave to be frequency modulated again has a frequency in the 5 to 8.5 MHz band, and its frequency deviation is suitably selected, for example, as 100 kHz.

The FM audio signal S_{AFM} in the case of the discrete mode is formed by frequency modulating first and second carrier waves of the 5 to 8.5 MHz band by the left audio signal L and the right audio signal R, respectively. The frequency deviation of each carrier wave is suitably selected, for example, as 75 kHz. In this case, the spacing between the frequencies of the first and second carrier waves is selected, for example, as 0.18 MHz. Further, the FM audio signal S_{AFM} in the case of the matrix mode results from frequency modulating first and second carrier waves in the 5 to 8.5 MHz band by the sum signal (L + R) and the difference signal (L - R), respectively. The frequency deviation of each carrier wave is suitably selected, for example, as 100 kHz. In this case, the spacing between the first and second carrier waves is frequently selected to be 1.00 MHz.

The positions of the carrier waves in the FM audio signal S_{AFM} are not standardised for the several modes, and thus they may be placed at any given positions in the range from 5.0 to 8.5 MHz. The positions at which the carrier waves are placed most frequently will be indicated below with reference to Figures 5A to 5D, respectively. In the case of the monaural mode and the multiplex mode (Figures 5A and 5B), the single carrier wave is positioned at 6.80 MHz; in the case of the discrete mode (Figure 5C), the carrier waves are positioned at 5.58 MHz and 5.76 MHz; and, in the case of the matrix mode (Figure 5D), the carrier waves are positioned at 5.80 MHz and 6.80 MHz.

By way of example, the number of channels available for the ku band and the c band is 24 channels. As earlier noted, the planes of polarisation of the satellite broadcast signals for the respective channels are made different for the adjacent channels. For example, the odd-numbered channels, such as channels 1,3,....,23, have horizontal planes of polarisation, while the even-numbered channels, such as channels 2,4,....,24, have vertical planes of polarisation. This ensures that, whereas the necessary bandwidth per channel is, for example, 27 MHz, and the frequency spacing between the adjacent channels is only about 20 MHz, as shown on Figure 1, so that adjacent channel bands overlap, radio interference between the adjacent channels will be avoided.

Referring again to Figure 3, it will be seen that the signal S_{BS}′ from the S/U converter 12b is supplied through a terminal 13 to a signal processor 14 provided in a receiver 100. In the signal processor 14, the signal S_{BS}′, which has a frequency ranging from 950 to 1450 MHz, is converted to an intermediate frequency signal having a frequency of, for example, 402.78 MHz, and then FM-demodulated and thereby delivered as a mixed signal S_{O} which is formed of the video signal Sv and the FM audio signal S_{AFM} shown in Figure 4.

The received channel is selected by changing a local signal S_{L} supplied to the processor 14 from a phase locked loop (PLL) circuit 15 for frequency conversion of the signal S_{BS}′. The PLL circuit 15 is controlled by a microcomputer 17 in response to manipulation by a user of an operation panel 16. More particularly, the frequency dividing ratio of a frequency divider (not shown) contained in the PLL circuit 15 may be controlled to determine the channel selected. A signal S_{AFT} indicative of any change of the intermediate frequency is supplied from the signal processor 14 to the microcomputer 17 so that an automatic fine tuning (AFT) operation may be carried out for maintaining the intermediate frequency at 402.78 MHz.

The received channel may be selected at random by suitable actuation of a key-pad, comprising ten keys (1) to (0), provided on the operation panel 16, or the channel selection may be effected in sequence by actuation of an up-key 161 or a down-key 162 on the operation panel 16.

In order to effect randon channel selection, the user inputs a numeral corresponding to the desired channel by suitably depressing one or more of the ten keys (1) to (0) on the operational panel 16 and then depressing an enter key (ENTER). As a result of the foregoing, the dividing ratio of the frequency divider contained in the PLL circuit 15 is changed by the microcomputer 17 so that the resulting changed frequency of the local signal S_{L} from the PLL circuit 15 is suitable for selecting or tuning to the desired channel.

As described above, the plane of polarisation of the satellite broadcast signal S_{BS} is either a horizontal or vertical plane of polarisation in dependence on the channel. Accordingly, when the received channel is changed, the reception plane of polarisation established by the polariser 12a must be matched with the new received channel. A key 163 on the operation panel 16 is actuated to change over the reception plane of polarisation. More specifically, the state of a switching signal S_{PO} supplied from the microcomputer 17 through an amplifier 18 to a terminal 19 and used to control the polariser 12a to change over the reception plane of polarisation is alternated or changed by successive operations of the key 163, thus changing over the reception plane of polarisation established by the polariser 12a.

In order to effect sequential channel selection, the user depresses the up-key 161 or the down-key 162 provided on the operation panel 16. As a result of the foregoing, the dividing ratio of the frequency divider contained in the PLL circuit 15 is sequentially changed by the microcomputer 17 so that the frequency of the local signal S_{L} from the PLL circuit 15 is sequentially changed, and the received channel thus is changed in sequence so long as the key 161 or 162 is depressed. When the up-key 161 is depressed, the received channel is changed in the order of 1,3...23,2,4...24,1,4,.... . On the other hand, when the down-key 162 is depressed, the received channel is changed in the order of 23,21,...,1,24,22,...,2,23,21.... . In other words, the received channel is selected from the odd-numbered channels in sequence and then from the even-numbered channels in sequence, alternately. Further, as described above, the plane of polarisation for each odd-numbered channel is horizontal and the plane of polarisation for each even-numbered channel is vertical so that, when the selection is changed from among the even-numbered channels to among the odd-numbered channels, or from among the odd-numbered channels to among the even-numbered channels, the reception plane of polarisation is suitably changed. In order words, the state of the switching signal S_{PO} derived from the microcomputer 17 is automatically changed for changing over the reception plane of polarisation only when the channel selection changes from among the odd-numbered of even-numbered channels to among the even-numbered or odd-numbered channels, respectively.

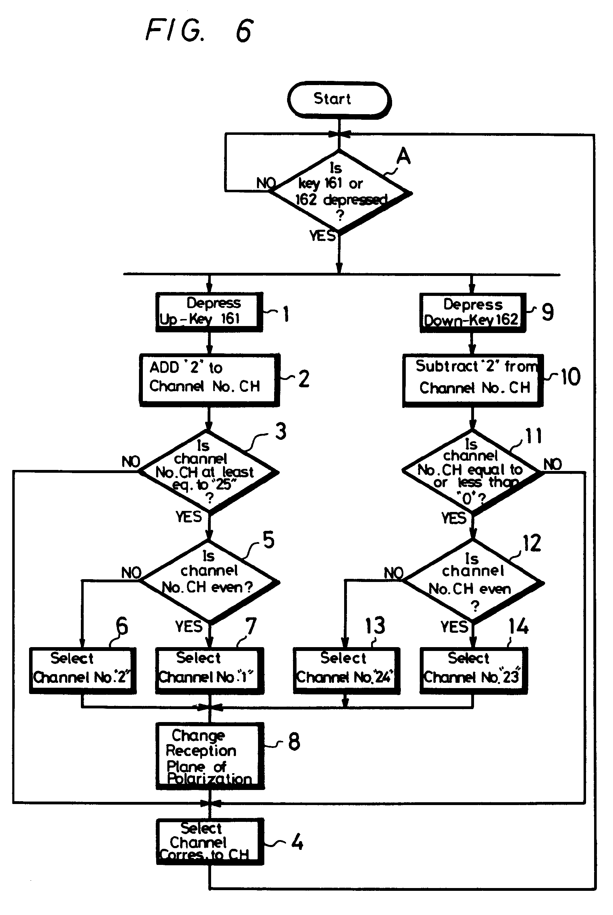

Referring now to Figure 6, which is a flow chart showing a program for the sequential channel selection operation, it will be seen that, in a step A following the start of the program, it is determined or decided if either the up-key 161 or the down-key 162 is depressed. If the answer to the decision step A is "NO", that step is iterated. If one of the keys 161 and 162 is depressed, the program goes to a step 1 or a step 9. If the up-key 161 is depressed at the step 1, "2" is added to the channel number CH at a step 2. Then, the program goes to a step 3 at which it is determined whether the channel number CH is at least equal to "25", that is " 25" or more. If the channel number CH is less than "25", the program immediately goes to a step 4 at which the channel corresponding to the channel number CH is selected. However, if the channel number CH is equal to or more than "25", the program goes from the step 3 to a step 5. At the step 5, it is determined whether the channel number CH is even or odd. If the channel number is odd, the program goes to a step 6 at which the channel number "2" is selected. On the other hand, if the channel number is even, the program goes to a step 7 at which the channel number CH "1" is selected. From the step 6 or 7, the program goes to a step 8. At the step 8, the reception plane of polarisation is suitably switched and then the channel corresponding to the channel number CH is selected at the step 4. From the step 4, the program returns to the step A at which it is again decided if either of the keys 161 and 162 is depressed. So long as the up-key 161 is depressed, the above-mentioned operations are repeatedly executed. When the up-key 161 is released, the reception channel number existing at that time is ultimately selected.

When the down-key 162 is depressed at the step 9, the program goes to a step 10 at which "2" is subtracted from the channel number CH. Then, the program goes to a step 11 at which it is decided whether the channel number CH is equal to or less than "0". If the channel number CH is not equal to or less than "0", the program goes to the step 4. At the step 4, the channel corresponding to the channel number CH is selected. On the other hand, if the channel number CH is equal to or less than "0", the program goes to a step 12 at which it is decided whether the channel number CH is even or odd. If the channel number CH is odd, the channel number "24" is selected at a step 13. On the other hand, if the channel number is even, the channel number "23" is selected at a step 14. After the step 13 or 14, the reception plane of polarisation is switched at the step 8, the channel corresponding to the channel number CH is selected at the step 4 and the program returns to the step A. So long as the down-key 162 is depressed, the above-mentioned operations are repeatedly executed. When the down-key 162 is released, the reception channel number existing at that time is ultimately selected.

In the course of the above described channel selection, a display section 201 of a display panel 20 (Figure 3) displays the channel number of the received channel. In the state illustrated in Figure 3, it will be seen that channel number "6" is displayed as being selected. When the reception plane of polarisation is switched to the horizontal or vertical plane, a display section 202 (H) or a display section 203 (V), respectively, is illuminated on the display panel 20. A display section 204 on the display panel 20 is illuminated when a satellite broadcast signal is received. A display section 205 on the display panel 20 is illuminated when the received satellite broadcast signal is of a predetermined one of the bands, for example, the ku band or the c band.

The mixed signal S_{O} (Figure 4) derived from the signal processor 14 is supplied to a de-emphasis circuit 21 in which the signal, which had undergone a pre-emphasis at the transmission side, is de-emphasised or re-converted to the original signal. An output signal from de-emphasis circuit 21 is supplied to a low pass filter 22 from which the video signal S_{V} is derived. The video signal S_{V} is amplified by an amplifier 23 and then supplied to an energy dispersal signal eliminating cicuit 24. In the circuit 24, an energy dispersal signal, which comprises a triangular wave superimposed upon the video signal S_{V} at the transmission side, is removed from the video signal S_{V}, and the signal S_{V} from the circuit 24 is delivered through a muting circuit 25 to an output terminal 26. The muting circuit 25 is controlled by a muting control signal S_{MV} which is formed by the signal processor 14 in response to the existence or non-existence of the carrier wave of the intermediate frequency of 402.78 MHz. When the carrier wave with the intermediate frequency of 402.78 is absent, the muting circuit 25 is made operative, that is, placed in a muting state.

The mixed signal S_{O} derived from the signal processor 14 is supplied also to a band pass filter 30 from which there is derived the FM audio signal S_{AFM} having a carrier wave in the 5.0 to 8.5 MHz band. The FM audio signal S_{AFM} is supplied to phase locked loop (PLL) circuits 31 and 32, each of which includes a mixer and a frequency converter (not shown). The PLL circuits 31 and 32 are used to convert a carrier wave of the FM audio signal S_{AFM} to a wave with the frequency of 10.7 MHz. In the example mentioned above, when the selected audio mode is the monaural mode or the multiplex mode, a single carrier wave in the 5.0 to 8.5 MHz band is used, and the converted output is derived from, for example, the PLL circuit 31. On the other hand, when the selected audio mode is the discrete mode or the matrix mode, first and second carrier waves in the 5.0 to 8.5 MHz band are used as described above, so that the converted outputs are derived from both the PLL circuits 31 and 32.

Since the freuqencies of the carrier waves of the FM audio signal S_{AFM} for the several modes are not determined uniformly or standardised, the carrier waves may be placed at any positions within 5.0 to 8.5 MHz band. Therefore, in order to receive a desired FM audio signal S_{AFM}, that is in order to convert the carrier wave of the FM audio signal S_{AFM} to an intermediate frequency signal of 10.7 MHz, on the basis of the user's operation of keys on the operation panel 16, suitable frequency dividing radio control signals SN1 and SN2 are supplied to the PLL circuits 31 and 32, respectively, from the microcomputer 17 and the frequency dividing ratios of frequency dividers (not shown) contained in the PLL circuits 31 and 32 are correspondingly controlled so as to carry out the so-called tuning.

As earlier noted, the frequencies of the carrier waves of the FM audio signal S_{AFM} for the several audio modes may be selected freely in a range of from 5.0 to 8.5 MHz. As shown in Figures 5A to 5D, in the case of the monaural mode and the multiplex mode, the carrier waves are frequently given a frequency of 6.80 MHz; in the case of the discrete mode, the carriers are frequently given the frequencies 5.58 MHz and 5.76 MHz; and, in the case of the matrix mode, the carriers are frequently given the frequencies 5.80 MHz and 6.80 MHz. A key 164 is provided on the operation panel 16 and may be depressed to select the audio mode. When the key 164 is depressed sequentially or repeatedly, the audio mode is changed in the sequential order of monaural mode, multiplex mode, discrete mode, matrix mode, monaural mode,... . When the monaural mode or the multiplex mode is selected, tuning is carried out automatically so that the tuning frequency f1 in the PLL circuit 31 becomes 6.80 MHz. When the audio mode is switched to the discrete mode, tuning is carried out automatically so that the tuning frequencies f1 and f2 of the PLL circuits 31 and 32 becomes 5.58 MHz and 5.76 MHz, respectively. Further, when the audio mode is switched to the matrix mode, tuning is carried out automatically so that the tuning frequencies f1 and f2 of the PLL circuits 31 and 32 become 5.80 MHz and 6.80 MHz, respectively. In each instance, the selected audio mode, for example selection of the monaural, multiplex, discrete and matrix modes, is indicated or displayed by selective illumination of display sections 206,207,208 and 209, respectively, on the display panel 20.

Thus, upon changing over from one to another of the audio modes, the tuning frequencies of the PLL circuits 31 and 32 are selected to have the predetermined values. However, if the carrier waves of the FM audio signal S_{AFM} do not have these predetermined tuning frequencies, tuning nevertheless can be carried out by the user operating keys on the operation panel 16. For example, after an audio tuning key 165 on the operation panel 16 is depressed, the ten keys (1) to (0) or the up-key 161 or the down-key 162 may be used to select the tuning frequencies.

As shown in Figure 3, an audio signal S_{A1} derived from the PLL circuit 31 and having the carrier wave of 10.7 MHz is supplied through a band pass filter 33 with a narrow pass band and also through a band pass filter 34 with a wide pass band to fixed contacts A and B, respectively, of a change-over switch 35. Similarly, an audio signal S_{A2} having a carrier wave of 10.7 MHz and derived from the PLL circuit 32 is supplied through a band pass filter 36 with a narrow pass band and a band pass filter 37 with a wide pass band to fixed contacts A and B, respectively, of a change-over switch 38. When the audio mode is the monaural mode or the discrete mode, the frequency deviation is relatively narrow, for example as small as 75 kHz, as described above. Thus, the change-over switches 35 and 38 are then positioned as shown to engage the contacts A so that audio signals S_{A1} and S_{A2}, after passage through the narrow band pass filters 33 and 36, are derived from the change-over switches 35 and 38. On the other hand, when the audio mode is the multiplex mode or the matrix mode, the frequency deviation is relatively wide, for example as wide as 100 kHz, as described above, so that the audio signals S_{A1} and S_{A2} passed through the wide band pass filters 34 and 37 are derived from the change-over switches 35 and 38. Two-bit control signals (A and B) are derived from the microcomputer 17 in response to selection of the audio mode. More specifically, when the monaural mode is selected, a signal (1,1) is generated; when the multiplex mode is selected, a signal (0,0) is generated; when the discrete mode is selected, a signal (1,0) is generated; and when the matrix mode is selected, a signal (0,1) is generated.

As described above, the signal A is "1" for the monaural mode and the discrete mode, while it is "0" for the multiplex mode and the matrix mode. The signal A is supplied to the change-over switches 35 and 38 as a control or switching signal therefor. When the signal A is "1", the change-over switches 35 and 38 are connected to their contacts A. When the signal A is "0", the switches 35 and 38 are connected to their contacts B.

The audio signals derived from the change-over switches 35 and 38 are supplied to FM demodulators 39 and 40, respectively. Demodulated outputs from the FM demodulators 39 and 40 are both supplied to an audio processor 41.

Signal procesing operations corresponding to the selected audio mode are executed in the audio processor 41. For this purpose, the 2-bit signals A and B from the microcomputer 17 are supplied to a decoder 42 in which they are converted to 4-bit signals a,b,c and d which are then supplied to the audio processor 41 as control signals therefor. For example, in the case of the monaural mode, the 2-bit signal (1,1) is converted in the decoder 42 to a 4-bit signal (1,0,0,0); in the case of the multiplex mode, the signal (0,0) is converted to a signal (0,1,0,0); in the case of the discrete mode, the signal (1,0) is converted to a signal (0,0,1,0); and in the case of the matrix mode, the signal (0,1) is converted to a signal (0,0,0,1). Thus, the audio processor 41 is controlled by these signals so as to carry out signal processing corresponding to each audio mode.

In the case of the monaural mode, monaural audio signals are derived from first and second outputs of the audio processor 41 and delivered through amplifiers 43 and 44 and muting circuits 45 and 46 to output terminals 47 and 48, respectively. In the case of the multiplex mode, the discrete mode or the matrix mode, left and right audio signals L and R are derived from the first and second outputs of the audio processor 41 and delivered through the amplifiers 43 and 44 and the muting circuits 45 and 46 to the output terminals 47 and 48, respectively.

From the FM demodulators 39 and 40 there are derived signals S_{M1} and S_{M2} which becomes of a low level "0" in the presence of the audio signals S_{A1} and S_{A2} and of a high level "1" in the absence thereof. The signals S_{M1} and S_{M2} are supplied to an AND-circuit 49. When the output of AND-circuit 49 is at the high level "1", that is when neither the audio signal S_{A1} nor the audio signal S_{A2} exists, the muting circuits 45 and 46 are operated to mute the respective inputs.

It will be appreciated that the above-described SHF receiver embodying this invention for receiving satellite braodcast signals having different planes of polarisation for adjacent or odd-numbered and eve-numbered channels, respectively, is operative, upon sequential channel selection, to select sequentially from among alternate or every other channels, for example the odd-numbered channels, having a first plane of polarisation, and then to switch automatically the receiving plane of polarisation of a polariser and sequentially select from among the other alternate channels, for example the even-numbered channels, having a second plane of polarisation. Thus, the occasions at which the reception planes of polarisation need to be switched are considerably reduced whereby the channel selection speed is increased.

Further, the reception planes of polarisation can be switched automatically so that the user can be freed from the burdensome task of switching the reception plane of polarisation.

Although the above-described embodiment of the present invention involves an arrangement in which the plane of polarisation for each odd-numbered channel is horizontal and the plane of polarisation for each even-numbered channel is vertical, an arrangement opposite to the above can be employed. Also, the invention can be similarly applied when a clockwise circular polarisation wave and an anticlockwise circular polarisation wave are employed for the odd-numbered and even-numbered channels, respectively.

## Claims

1. Apparatus for receiving satellite broadcast signals that are broadcast in a number of channels occupying successively overlapping frequency bands with first alternate channels having a first plane of polarisation and second channels arranged between the first channels and having a second plane of polarisation, the apparatus comprising:
antenna means (11) for receiving the satellite broadcast signals;
polariser means (12a) for receiving a satellite broadcast signal derived from the antenna means (11) and providing a plane of polarisation that can be switched for correspondence with the plane of polarisation of the received satellite broadcast signal;
channel selecting means (17, 161/162) for selecting the channels of the satellite broadcast signals;
means (15) for tuning to each channel selected by the channel selecting means (17, 161/162); and
control means (17) for controlling the selecting of the channels, the tuning of the tuning means (15) and the switching of the plane of polarisation of the polariser means (12a) in accordance with a channel selected by the channel selecting means (161/162);
characterised in that the channel selecting means (17, 161/162) is operative to select the channels sequentially, and in that the control means (17) is operative to cause the channel selecting means to first select sequentially from among the first alternate channels having the first plane of polarisation, and thereafter to switch the plane of polarisation of the polariser means (12a) and then cause channel selecting in sequence from among the second channels having the second plane of polarisation.

2. Apparatus according to claim 1, which is capable of receiving satellite broadcast signals of which the first channels are odd-numbered channels and the second channels are even-numbered channels.

3. Apparatus accroding to claim 2, in which the channel selecting means (17,161/162) includes means (161) for sequentially selecting the odd-numbered and even-numbered channels in ascending order, and means (162) for sequentially selecting the odd-numbered and even-numbered channels in descending order.

4. Apparatus according to claim 1, claim 2 or claim 3, which is capable of receiving satellite broadcast signals which are in a plurality of bands (ku,c), the apparatus comprising means for switching from one to another of the bands (ku,c).

5. Apparatus according to any one of the preceding claims, which is capable of receiving satellite broadcast signals that include audio information selectively provided in a plurality of different modes employing a single carrier wave and two carrier waves, respectively, which are modulated with different deviations, the apparatus comprising means for selectively deriving audio information provided in a received satellite broadcast signal in any one of said modes.

## Patentansprüche

1. Gerät zum Empfang von Satellitenrundfunksignalen, die in einer Anzahl von Kanälen gesendet werden, die sukzessive überlappende Frequenzbänder mit ersten alternierenden Kanälen mit einer ersten Polarisationsebene und zweite zwischen den ersten Kanälen angeordnete Kanäle mit einer zweiten Polarisationsebene belegen, wobei das Gerät folgendes aufweist:
Antennenmittel (11) zum Empfang der Satellitenrundfunksignale;
Polarisiermittel (12a) zum Empfang eines von den Antennenmitteln (11) abgeleiteten Satellitenrundfunksignales und zur Bereitstellung einer Polarisationsebene, die zur Übereinstimmung mit der Polarisationsebene des empfangenen Satellitenrundfunksignales geschaltet werden kann;
Kanalauswahlmittel (17; 161/162) zur Auswahl der Kanäle der Satellitenrundfunksignale;
Mittel (15) zur Abstimmung auf einen jeden durch die Kanalauswahlmittel (17; 161/162) ausgewählten Kanales; und
Steuermittel (17) zur Steuerung der Auswahl der Kanäle, der Abstimmung der Abstimmittel (15) und der Schaltung der Polarisationsebene von den Polarisiermitteln (12a) entsprechend einem durch die Kanalauswahlmittel (161/162) ausgewählten Kanal; **gekennzeichnet** durch die Anwendung der Kanalauswahlmittel (17, 161/162) zur sequentiellen Auswahl der Kanäle und durch die Anwendung der Steuermittel (17), um zu bewirken, daß die Kanalauswahlmittel zuerst sequentiell aus den ersten alternierenden Kanälen mit der ersten Polarisationsebene auswählen, danach die Polarisationsebene des Polarisiermittels (12a) schalten und dann eine sequentielle Kanalauswahl aus den zweiten Kanälen mit der zweiten Polarisationsebene bewirken.

2. Gerät nach Anspruch 1, welches Satellitenrundfunksignale empfangen kann, deren erste Kanäle ungeradzahlig und deren zweite Kanäle geradzahlig numeriert sind.

3. Gerät nach Anspruch 2, bei dem die Kanalauswahlmittel (17; 161/162) Mittel (161) zur sequentiellen Auswahl der ungeradzahligen und geradzahligen Kanäle in steigender Reihenfolge und Mittel (162) zur sequentiellen Auswahl der ungeradzahligen und geradzahligen Kanäle in abnehmender Reihenfolge beinhalten.

4. Gerät nach Anspruch 1, 2 oder 3, welches Satellitenrundfunksignale empfangen kann, die sich in einer Vielzahl von Bändern (ku, c) befinden, wobei das Gerät Mittel zum Schalten von einem auf ein anderes Band (ku, c) enthält.

5. Gerät nach einem der vorangehenden Ansprüche, welches Satellitenrundfunksignale empfangen kann, die Audio-Informationen enthalten, die selektiv in einer Vielzahl von verschiedenen Moden zur Verfügung stehen, die eine einzige Trägerwelle bzw. zwei Trägerwellen verwenden, die mit unterschiedlichem Hub moduliert sind, wobei das Gerät Mittel zur selektiven Ableitung von Audio-Informationen enthält, die in einem empfangenen Satellitenrundfunksignal in einer der Moden zur verfugung stehen.

## Revendications

1. Appareil pour recevoir des signaux de radiodiffusion par satellite qu sont radiodiffusés dans un certain nombre de canaux occupant des bandes de fréquence se recouvrant partiellement successivement, avec des premiers canaux alternés ayant un premier plan de polarisation et des deuxièmes canaux disposés entre les premiers canaux et ayant un deuxième plan de polarisation, l'appareil comprenant:
- des moyens formant antenne (11) pour recevoir les signaux de radiodiffusion par satellite;
- des moyens formant polariseur (12a) pour recevoir un signal de radiodiffusion par satellite obtenu à la sortie des moyens formant antenne (11) et fournissant un plan de polarisation qui peut être commuté pour correspondre au plan de polarisation du signal de radiodiffusion par satellite reçu;
- des moyens de sélection de canaux (17, 161/162) pour sélectionner les canaux des signaux de radiodiffusion par satellite;
- des moyens (15) pour accorder sur chaque canal sélectionné par les moyens de sélection de canaux (17, 161/162); et
- des moyens de commande (17) pour commander la sélection des canaux, l'accord des moyens d'accord (15) et la commutation du plan de polarisation des moyens formant polariseur (12a) selon le canal sélectionné par les moyens de sélection de canaux (161/162),
caractérisé en ce que les moyens de sélection de canaux (17, 161/162) fonctionnent pour sélectionner les canaux séquentiellement, et en ce que les moyens de commande (17) fonctionnent pour amener les moyens de sélection de canaux à sélectionner séquentiellement un canal d'abord parmi les premiers canaux alternés ayant le premier plan de polarisation et, après cela, à commuter le plan de polarisation des moyens formant polariseur (12a) et, ensuite, à provoquer la sélection d'un canal successivement parmi les deuxièmes canaux ayant le deuxième plan de polarisation.

2. Appareil selon la revendication 1, qui est capable de recevoir des signaux de radiodiffusion par satellite dont les premiers canaux sont des canaux impairs et les deuxièmes canaux sont des canaux pairs.

3. Appareil selon la revendication 2, dans lequel les moyens de sélection de canaux (17, 161/162) comprennent des moyens (161) pour sélectionner séquentiellement les canaux impairs et pairs en ordre croissant, et des moyens (162) pour sélectionner séquentiellement les canaux impairs et pairs en ordre décroissant.

4. Appareil selon la revendication 1, 2 ou 3, qui est capable de recevoir des signaux de radiodiffusion par satellite qui sont compris dans une pluralité de bandes (ku, c), l'appareil comprenant des moyens pour commuter d'une bande à une autre des bandes (ku, c).

5. Appareil selon l'une quelconque des revendications précédentes, qui est capable de recevoir des signaux de radiodiffusion par satellite qui comprennent des informations audio fournies sélectivement dans une pluralité de modes différents employant une seule onde porteuse et deux ondes porteuses, respectivement, qui sont modulées avec des excursions différentes, l'appareil comprenant des moyens pour obtenir sélectivement les informations audio fournies dans un signal de radiodiffusion par satellite reçu dans l'un quelconque desdits modes.
